# EUROPÄISCHE PATENTSCHRIFT

(11) **EP 0 378 773 B1**
(45) Veröffentlichungstag und Bekanntmachung des Hinweises auf die Patenterteilung: **21.07.1993**
(21) Anmeldenummer: 89120829.0
(22) Anmeldetag: 10.11.1989
(51) Int. Cl.: G01D 5/38, G01B 11/26

(54) **Winkelmesseinrichtung**
Angle-measuring device
Dispositif pour mesurer des angles

(30) Priorität: 20.01.1989 DE 3901534
(43) Veröffentlichungstag der Anmeldung: 25.07.1990
(73) Patentinhaber: Dr. Johannes Heidenhain GmbH, D-83292 Traunreut (DE)
(72) Erfinder: Michel, Dieter, Dipl.-Ing.(FH), D-8220 Traunstein (DE); Huber, Walter, Dipl.-Ing.(FH), D-8220 Traunstein (DE)

(56) Entgegenhaltungen:
- EP-A- 0 163 362
- DE-A- 3 633 574
- Dissertationsschrift "Dreigitterschrittgeber", J. Willhelm, TU Hannover, 1978, S. 17-25.

## Beschreibung

Die Erfindung bezieht sich auf eine lichtelektrische Winkelmeßeinrichtung nach dem Oberbegriff des Anspruches 1.

Derartige Winkelmeßeinrichtungen sind aus einer Vielzahl von Druckschriften bekannt. Als zutreffendste sei von der DE-A- 36 33 574 ausgegangen, in der Winkelmeßeinrichtungen beschrieben sind, bei denen der Exzentrizitätsfehler durch diametrale Abtastung einer Gitterteilung kompensiert wird. Eines der Ausführungsbeispiele zeigt zwei Linearteilungen zur Umlenkung der positiven und negativen Beugungsstrahlen. Zur Gewinnung der Meßsignale werden Interferenzen der positiven und der negativen Beugungsstrahlen einer Ordnung ausgewertet.

In der EP-A- 0 163 362 ist beschrieben, daß mit einem speziell ausgestalteten Phasengitter mittels interferierender, benachbarter Beugungsstrahlen gezielt phasenverschobene Signale mit sehr gutem Modulationsgrad erzeugt werden können.

In der vorliegenden Erfindung liegt die Aufgabe zugrunde, eine einfach aufgebaute Winkelmeßeinrichtung der beschriebenen Gattung zu schaffen, bei der die Auswertung interferierender Beugungsstrahlen zu phasenverschobenen Signalen mit sehr gutem Modulationsgrad führt.

Diese Aufgabe wird von einer Winkelmeßeinrichtung mit den Merkmalen des Anspruches 1 gelöst.

Vorteilhafte Ausgestaltungen entnimmt man den abhängigen Ansprüchen.

Die Vorteile der erfindungsgemäßen Winkelmeßeinrichtung liegen im einfachen Aufbau und in der Möglichkeit, gezielt phasenverschobene Signale zu gewinnen. Mit Hilfe der Zeichnungen wird die Erfindung anhand von Ausführungsbeispielen näher erläutert.

Es zeigt
- Figur 1: eine schematische Winkelmeßeinrichtung im Schnitt;
- Figur 2: eine Teil-Draufsicht auf die Winkelmeßeinrichtung gemäß Figur 1;
- Figur3: eine Variante einer Winkelmeßeinrichtung im Schnitt, schematisiert;
- Figur 4: eine Teil-Draufsicht auf die Variante gemäß Figur 3;
- Figur 5: schematisiert eine Anordnung mit entfaltetem Strahlengang und
- Figur 6: einen noch weiter schematisierten Strahlengang.

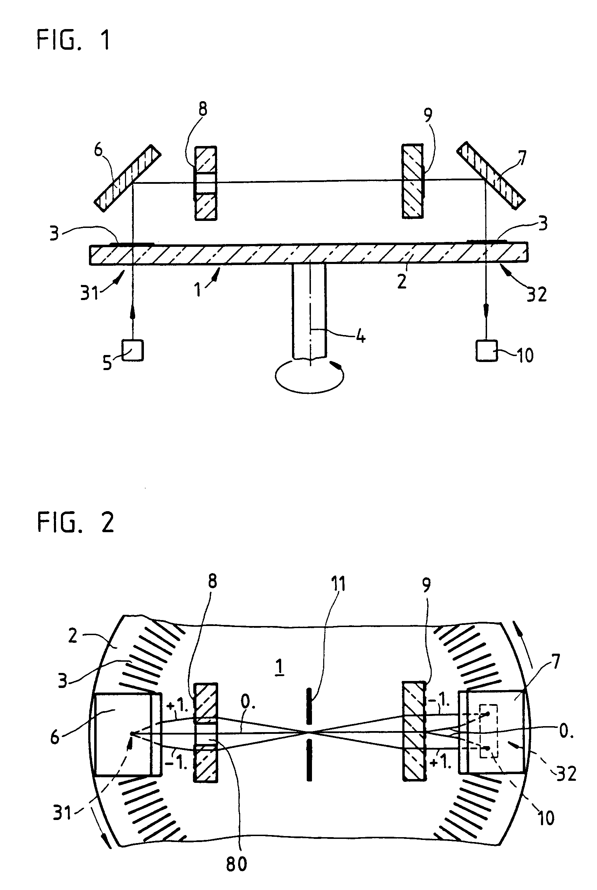

Figur 1 zeigt eine schematisierte Winkelmeßeinrichtung 1 mit einem Teilungsträger 2, der eine Kreisteilung 3 aufweist und um eine Drehachse 4 drehbar gelagert ist. Eine Lichtquelle - etwa in Form eines Lasers 5 beleuchtet den Teilungsträger 2. Der Beleuchtungslichtstrahl wird an der Kreisteilung 3 gebeugt. Die gebeugten Teil-Strahlenbündel werden mittels Umlenkspiegeln 6 und 7 auf die diametral gegenüberliegende Seite des Teilungsträgers 2 gelenkt, wo sie interferieren. Auf diese Weise werden an der Kreisteilung 3 zwei diametral gegenüberliegende Gitter-Abtastbereiche 31 und 32 gebildet.

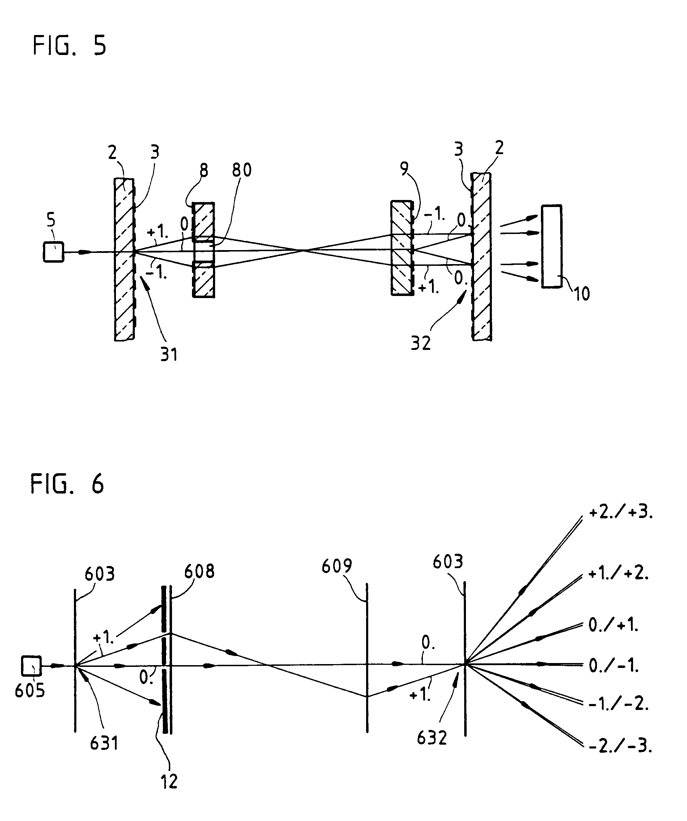

Im Strahlengang zwischen den beiden Gitter-Abtastbereichen 31 und 32 sind zwei Lineargitter 8 und 9 angeordnet, die der Strahlenumlenkung dienen. Dem zweiten Gitter-Abtastbereich 32 sind Photodetektoren 10 nachgeordnet, die Interferenzstreifen detektieren. Die Anordnung ist so ausgestaltet, daß immer nur Strahlenbündel benachbarter Beugungsordnungen interferieren. So entstehen Zweistrahlinterferenzen mit sinusförmiger Intensitätsänderung zwischen zwei Interferenzstreifen. In der Beschreibung der Figuren 4, 5 und 6 werden noch nähere Ausführungen dazu gemacht.

Die Draufsicht in Figur 2 zeigt die Umlenkung der gebeugten Teil-Strahlenbündel +1. und -1. Ordnung an den Lineargittern 8 und 9. Das Lineargitter 8 weist eine beugungsoptisch neutrale Zone 80 auf, durch die die 0. Ordnung unbeeinflußt hindurchtritt. Auch hier wird deutlich, daß nur Teil-Strahlenbündel benachbarter Beugungsordnungen interferieren, nämlich -1./0. sowie 0./+1..

Beim Stand der Technik hingegen werden jeweils die positiven und die negativen Teil-Strahlenbündel einer Beugungsordnung zur Interferenz gebracht.

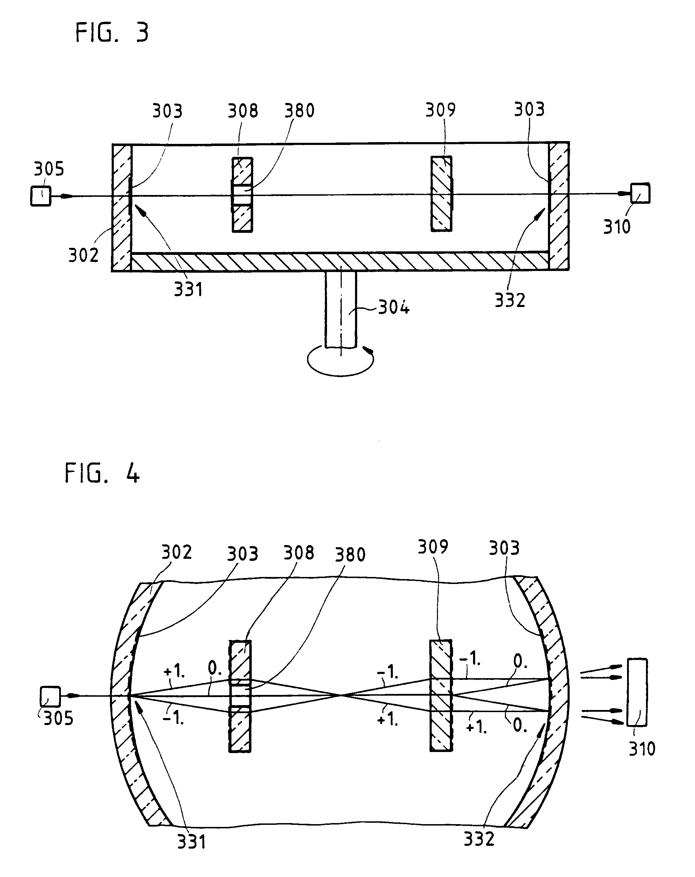

Beim Ausführungsbeispiel gemäß Figur 3 und Figur 4 ist auf einem um eine Drehachse 304 drehbaren transparenten Hohlzylinder 302 eine Winkelteilung 303 aufgebracht. Ein von einem Laser 305 ausgesendeter Lichtstrahl wird an der Winkelteilung 303 im Gitter-Abtastbereich 331 gebeugt, die Teil-Strahlenbündel +1. und -1. werden an Lineargittern 308 und 309 umgelenkt und treffen auf einen diametral gegenüberliegenden Gitter-Abtastbereich 332. Dort interferieren jeweils die Teil-Strahlenbündel der benachbarten Beugungsordnungen -1./0. und 0./+1.. Die Intensitätsänderungen zwischen zwei Interferenzstreifen werden von Photodetektoren 310 erfaßt und von einer nicht dargestellten Elektronik zu Meßsignalen aufbereitet. Im Lineargitter 308 befindet sich - wie beim ersten Ausführungsbeispiel - eine beugungsoptisch neutrale Zone 380, die die nullte Ordnung nicht beeinflußt.

In Figur 5 wird stark schematisiert ein sogenannter entfalteter Strahlengang dargestellt, der der Anordnung gemäß Figur 1 entspricht. Die dort gezeigten Umlenkspiegel 6 und 7 sind nicht dargestellt, da sie beugungsoptisch bedeutungslos sind und die Darstellung nur komplizieren würden. Aus Gründen der Übertragbarkeit sind die Bezugszeichen aus Figur 1 auch in Figur 5 eingetragen worden, die - wie leicht ersichtlich - im Kern den Darstellungen aus den Figuren 2 und 4 entspricht. Am Gitter der Kreisteilung 3 wird ein vom Laser 5 ausgesendeter Lichtstrahl gebeugt und die Teil-Strahlenbündel +1. und -1. der positiven und negativen ersten Beugungsordnungen werden abgelenkt und treffen auf ein Lineargitter 8. Die Gitterstruktur des Lineargitters 8 ist so gewählt, daß an ihm die positive und negative erste Beugungsordnung +1. und -1. umgelenkt werden und auf ein zweites Lineargitter 9 treffen. Dort werden sie erneut gebeugt. Die Gitterkonstanten dieses Lineargitters 9 müssen von denen des Lineargitters 8 abweichen und weichen auch untereinander je nach Beugungsordnung voneinander ab. Der Gitterbereich für die nullte Beugungsordnung weist die gleiche Gitterkonstante auf, wie Kreisteilung 3, die Gitterkonstanten für die positive und negative erste Ordnung weichen sowohl von der Gitterkonstanten der Kreisteilung 3 ab, als auch von der Gitterkonstanten des Lineargitters 8. Die nullte Beugungsordnung, die das Lineargitter 8 in einer beugungsoptisch neutralen Zone 80 passiert hat, wird am Lineargitter 9 ebenfalls gebeugt und kommt am Gitter der Kreisteilung 3 mit ihren benachbarten Beugungsordnungen zur Interferenz. Die Kreisteilung 3 wird demgemäß zweimal (an diametral gegenüberliegenden Gitter-Abtastbereichen 31 und 32) abgetastet, was zur Eliminierung eines Exzentrizitätsfehlers führt.

In Figur 6 ist schematisch ein entfalteter Strahlengang dargestellt, bei dem nicht erwünschte Beugungsordnungen durch eine Blende 12 ausgeblendet sind. Die Besonderheit bei diesem Ausführungsbeispiel liegt darin, daß die Lineargitter (hier ist zur Unterscheidung bei den Bezugszeichen der Grundindex "600" eingeführt) 608 und 609 identische Gitterparameter haben.

Nach der üblichen Beugung des Eingangsstrahles am Gitter der Kreisteilung 603 kommt es exakt diametral am zweiten Gitter-Abtastbereich 632 zur Rückmischung am Gitter der Kreisteilung 603. Mit Hilfe von nicht dargestellten Photoelementen werden Signale durch Interferenz beliebiger benachbarter Beugungsordnungen gewonnen.

Die Signale sind zueinander phasenverschoben. Beispielsweise können durch Auswerten der interferierenden Teil-Strahlenbündel von -1./2., 0./-1., 0./+1., +1./+2. Ordnung hier um jeweils etwa 90° zueinander phasenverschobene Signale mit sehr gutem Modulationsgrad erzeugt werden. Dabei wird der Betrag der Phasenverschiebung durch die Gestaltung der als Phasengitter ausgebildeten Kreisteilung 3, 303, 603 bestimmt. Die Gitterparameter der Lineargitter 8, 9, 308, 309, 608, 609 richten sich nach der gewünschten Bauform und nach der Art, wie die jeweils benachbarten Beugungsordnungen ausgewertet werden sollen. Die Lineargitter können auch als holographisch optische Elemente (HOE) ausgeführt sein, die beispielsweise als computergenerierte Hologramme hergestellt werden.

Wird eine Lichtquelle mit geringer Kohärenzlänge verwendet, so wird das Substrat der Umlenk-Gitter so gestaltet, daß sich für die Teil-Strahlenbündel der verschiedenen Beugungsordnungen optisch gleichlange Wege ergeben.

Die Erfindung ist nicht auf die Anwendung bei sogenannten Durchlicht-Meßeinrichtungen beschränkt, sondern auch bei Auflicht-Meßeinrichtungen einsetzbar.

## Patentansprüche

1. Lichtelektrische Winkelmeßeinrichtung (1) zur Messung der Relativlage zweier zueinander drehbarer Objekte, bei der eine Winkel-Gitterteilung (3) eines mit dem einen Objekt verbundenen Teilungsträgers (2) an wenigstens zwei diametral gegenüberliegenden Gitter-Abtastbereichen (31, 32) von einer mit dem anderen Objekt verbundenen Abtasteinrichtung mittels Lichtstrahlbeugung abgetastet wird, wobei Teil-Strahlenbündel (-1./-2.,0./-1.,0./+1.,+1./+2.) durch Umlenk-Gitter (8, 308, 608; 9, 309, 609) von einem Gitter-Abtastbereich (31) auf den diametral gegenüberliegenden Gitter-Abtastbereich (32) gerichtet werden und die Abtasteinrichtung Photodetektoren (10, 310) zum Erfassen von interferierenden Teil-Strahlenbündeln (-1./-2.,0./-1.,0./+1.,+1./+2.) aufweist, dadurch gekennzeichnet, daß zumindest eines der Umlenk-Gitter (8, 308, 608) eine beugungsoptisch neutrale Zone (80, 380) für die nullte Beugungsordnung (0.) aufweist und weitere Gitterparameter und die Anordnung der Umlenk-Gitter (8, 308, 608; 9, 309, 609) so auf die Winkel-Gitterteilung (3, 303, 603) und die geometrische Lage der Photodetektoren (10, 310) abgestimmt sind, daß nur Teil-Strahlenbündel benachbarter Beugungsordnungen (+2./+3., +1./+2., 0./+1., 0./-1, -1./-2., -2./-3.) zur Interferenz und zur Auswertung kommen.

2. Lichtelektrische Winkelmeßeinrichtung nach Anspruch 1, dadurch gekennzeichnet, daß die Winkel-Gitterteilung (3, 303, 603) als Phasengitter ausgebildet ist, und daß die Gitterparameter der Umlenk-Gitter (8, 308, 608; 9, 309, 609) zumindest zum Teil von den Gitterparametern der Winkel-Gitterteilung (3, 303, 603) abweichen.

3. Lichtelektrische Winkelmeßeinrichtung nach Anspruch 2, dadurch gekennzeichnet, daß die Umlenk-Gitter (8, 308; 9, 309) unterschiedliche Gitterkonstanten aufweisen.

4. Lichtelektrische Winkelmeßeinrichtung nach Anspruch 2, dadurch gekennzeichnet, daß die Umlenk-Gitter (608; 609) gleiche Gitterparameter aufweisen

5. Lichtelektrische Winkelmeßeinrichtung nach Anspruch 1, dadurch gekennzeichnet, daß die Umlenk-Gitter (8, 9) als holographisch optische Elemente (HOE) ausgeführt sind.

6. Lichtelektrische Winkelmeßeinrichtung nach Anspruch 1, dadurch gekennzeichnet, daß zur Ausblendung unerwünschter Beugungsstrahlen im Strahlengang Blenden (11,12) angeordnet sind.

7. Lichtelektrische Winkelmeßeinrichtung nach Anspruch 6, dadurch gekennzeichnet, daß die Blende (11) bei der Einschnürung des Strahlenganges angeordnet ist.

8. Lichtelektrische Winkelmeßeinrichtung nach Anspruch 1, dadurch gekennzeichnet, daß das Substrat der Umlenk-Gitter (8, 9, 308, 309, 608, 609) so ausgestaltet ist, daß sich für die Teil-Strahlenbündel der verschiedenen Beugungsordnungen (0., +1., -1.) gleichlange optische Wege ergeben.

## Claims

1. Photoelectric angle measuring device (1) for measuring the relative position of two relatively rotatable objects, in which an angular grid scale (3) of an index disc (2) connected to one object is scanned at at least two diametrically opposed grid scanning regions (31, 32) by a scanning device connected to the other object by light beam diffraction, wherein partial beams (-1./-2., 0./-1., 0./+1., +1./+2.) are directed by deflecting grids (8, 308, 608; 9, 309, 609) from one grid scanning region (31) onto the diametrically opposed grid scanning region (32) and the scanning device comprises photodetectors (10, 310) for detecting interfering partial beams (-1./-2., 0./-1., 0./+1., +1./+2.), characterised in that at least one of the deflecting grids (8, 308, 608) comprises a neutral zone (80, 380) with respect to diffraction optics for the zero order of diffraction (0.) and other grid parameters and the arrangement of the deflecting grids (8, 308, 608; 9, 309, 609) are adjusted in such a way to the angular grid scale (3, 303, 603) and the geometrical position of the photodetectors (10, 310) that only partial beams of adjacent orders of diffraction (+2./+3., +1./+2., 0./+1., 0./-1, -1./-2., -2./-3.) interfere and are analysed.

2. Photoelectric angle measuring device according to claim 1, characterised in that the angular grid scale (3, 303, 603) is constructed as a phase grid and in that the grid parameters of the deflecting grids (8, 308, 608; 9, 309, 609) differ at least partially from the grid parameters of the angular grid scale (3, 303, 603).

3. Photoelectric angle measuring device according to claim 2, characterised in that the deflecting grids (8, 308; 9, 309) have different grid constants.

4. Photoelectric angle measuring device according to claim 2, characterised in that the deflecting grids (608; 609) have the same grid parameters.

5. Photoelectric angle measuring device according to claim 1, characterised in that the deflecting grids (8, 9) are constructed as holographically optical elements (HOE).

6. Photoelectric angle measuring device according to claim 1, characterised in that stops (11, 12) are arranged in the beam path for blanking out undesirable diffracted beams.

7. Photoelectric angle measuring device according to claim 6, characterised in that the stop (11) is arranged at the constriction of the beam path.

8. Photoelectric angle measuring device according to claim 1, characterised in that the substrate of the deflecting grids (8, 9, 308, 309, 608, 609) is constructed in such a way that there are optical paths of equal length for the partial beams of the different orders of diffraction (0., +1., -1.).

## Revendications

1. Dispositif photo-électrique de mesure d'angles (1) pour la mesure de la position relative de deux objets qui peuvent tourner l'un par rapport à l'autre, dans lequel une graduation angulaire en réseau (3) d'un support de graduation lié à l'un des objets est lue en au moins deux zones de lecture en réseau (31, 32) diamétralement opposées par un dispositif de lecture à diffraction de rayons lumineux lié à l'autre objet, des faisceaux partiels de rayons (-1./-2., 0./-1., 0./+1., +1./+2.) étant dirigés par des réseaux de déviation (8, 308, 608; 9, 309, 609) d'une zone de lecture (31) sur la zone de lecture (32) diamétralement opposée et le dispositif de lecture comportant des capteurs photo-électriques (10, 310) destinés à saisir des faisceaux partiels (-1./-2., 0./-1., 0./+1., +1./+2.) en interférence, caractérisé par le fait que l'un au moins des réseaux de déviation (8, 308, 608) comporte une zone (80, 380) neutre du point de vue de la diffraction optique et par le fait que d'autres paramètres du réseau et l'agencement des réseaux de déviation (8, 308, 608; 9, 309, 609) sont adaptés à la graduation angulaire en réseau (3, 303, 603) et à la position géométrique des capteurs photo-électriques (10, 310) de manière telle que seul des faisceaux partiels (10, 310) d'ordre de diffraction proche (+2./+3., +1./+2., 0./+1., 0./-1., -1./-2., -2./-3.) soient amenés en interférence et exploités.

2. Dispositif photo-électrique de mesure d'angles selon la revendication 1, caractérisé par le fait que la graduation angulaire en réseau (3, 303, 603) est agencée sous forme de réseau de phase et par le fait que les paramètres des réseaux de déviation (8, 308, 608; 9, 309, 609) diffèrent, pour une partie au moins,w1 des paramètre du réseau de la graduation angulaire (3, 303, 603).

3. Dispositif photo-électrique de mesure d'angles selon la revendication 2, caractérisé par le fait que les réseaux de déviation (8, 308; 9, 309) présentent différentes constantes de réseau.

4. Dispositif photo-électrique de mesure d'angles selon la revendication 2, caractérisé par le fait que les réseaux de déviation (608; 609) présentent des paramètres de réseau identiques.

5. Dispositif photo-électrique de mesure d'angles selon la revendication 1, caractérisé par le fait que les réseaux de déviation (8; 9) se présentent sous la forme d'éléments optiques holographiques (HOE).

6. Dispositif photo-électrique de mesure d'angles selon la revendication 1, caractérisé par le fait que des diaphragmes (11, 12) sont placés sur le trajet des rayons afin d'éliminer les rayons diffractés indésirables.

7. Dispositif photo-électrique de mesure d'angles selon la revendication 6, caractérisé par le fait que le diaphragme (11) est placé au niveau du point de croisement sur le trajet des rayons.

8. Dispositif photo-électrique de mesure d'angles selon la revendication 1, caractérisé par le fait que le subsaat des réseaux de déviation (8, 9; 308, 309; 608, 609) est agencé de manière à obtenir des trajets optiques de même longueur pour les faisceaux partiels des différents ordres (0., +1., -1.).
